# EUROPÄISCHE PATENTANMELDUNG

(11) **EP 1 161 882 A2**
(43) Veröffentlichungstag der Anmeldung: **12.12.2001**
(21) Anmeldenummer: 01113774.2
(22) Anmeldetag: 06.06.2001
(51) Int. Cl.: A23L 1/16

(54) **Verfahren zum Herstellen von Teigwaren**

(30) Priorität: 07.06.2000 DE 10028277
(71) Anmelder: Zahner Traiteur GmbH, 79108 Freiburg (DE)
(72) Erfinder: Zahner, Horst, 79108 Freiburg (DE)
(74) Vertreter: Weiss, Peter, Dr.

(57) **Zusammenfassung**

Bei einem Verfahren zum Herstellen von Teigwaren (9) aus im wesentlichen Mehl (18), Wasser (17) und gegebenenfalls Eiern (16), die zu einem Teig vermischt werden, wonach eine Formung der Teigwaren geschieht und diese danach gekocht werden, soll nach dem Kochvorgang eine schnelle Abkühlung erfolgen und die Teigware (9) anschliessend für eine vorbestimmte Zeit in einem Kühlraum (15) temperiert werden.

## Beschreibung

Die Erfindung betrifft ein Verfahren zum Herstellen von frischen, nassen Teigwaren aus im wesentlichen Mehl, Wasser und gegebenenfalls Eiern, die zu einem Teig vermischt werden, wonach eine Formung der Teigwaren geschieht und diese danach gekocht werden, sowie eine Anlage hierfür und eine Verpackung für diese Teigwaren.

Teigwaren sind Getreideprodukte, vor allem aus Hartweizengries und/oder Weizenmehl, mit oder ohne Zusatz von Eiern bzw. Eigelb. Sie entstehen durch Einteigen meist mit Wasser und anschliessendem Formen und Trocknen. Sie werden dann durch Kochen in Wasser zubereitet. Es gibt auch Kräuter- und Gemüseteigwaren. Ferner unterscheidet man nach der Form beispielsweise Bandnudeln, Fadennudeln, Makkaroni, Spaghetti (lange Ware) oder Hörnchen, Spätzle, Schupfnudeln usw. (kurze Ware).

Werden derartige Teigwaren nach dem Herstellen nicht sofort verzehrt, müssen sie haltbar gemacht werden. Bei der langen Ware geschieht dies in der Regel durch Trocknen, bei der kurzen Ware werden die Teigwaren durch Dampf, Wärme oder Mikrowellenbehandlung pasteurisiert.

Das heisst, nach dem Kochvorgang erfolgt ein zweites Erwärmen, wobei der zweimalige Erwärmungsprozess die Qualität abschwächt, so dass die Teigwaren nicht mehr so bissfest sind, wie dies gewünscht wird. Energetisch weist vor allem die Mikrowellenbehandlung einen Nachteil auf, da Mikrowellen eine Schwächung im Produkt von ca. 30° verursachen.

Der vorliegenden Erfindung liegt die Aufgabe zugrunde, ein Verfahren der oben genannten Art zu schaffen, mit welchem die Haltbarkeit der Teigwaren wesentlich verlängert wird, bei gleichzeitiger Beibehaltung einer gewünschten Bissfestigkeit und Frische.

Zur Lösung dieser Aufgabe führt, dass nach dem Kochvorgang eine schnelle Abkühlung erfolgt und die Teigware anschliessend für eine vorbestimmte Zeit in einem Kühlraum temperiert wird.

In der Praxis hat die Teigware nach dem Kochvorgang eine Temperatur von ca. 95° bis 98°C. Erfindungsgemäss wird die Teigware danach in ein spezielles Kühlwasserbecken getaucht, das z.B. aus drei Abschnitten bestehen kann. Zumindest im dritten Becken hat das Wasser eine Kühltemperatur von 4°C, ferner ist zumindest dem dritten Becken auch ein Mittel zugegeben, welches den pH-Wert auf bevorzugt 4,9 absenkt. In einem Ausführungsbeispiel der Erfindung besteht dieses Mittel aus Natriumacetat und Ascorbinsäure.

Durch die besondere und schnelle Abkühlung nach dem Kochprozess und durch die Absenkung des pH-Wertes wird eine minimale bakterielle Keimentwicklung erreicht.

In einem weiteren, nicht näher dargestellten Ausführungsbeispiel der vorliegenden Erfindung soll auch daran gedacht sein, eine schnelle Abkühlung der Teigware durch Bewässerung, bspw. von oben zu gewährleisten. Bspw. kann frisches Wasser permanent von oben duschenartig die Teigware zur schnellen Abkühlung beaufschlagen, während die Teigware bspw. über ein Transportband, Gitterrost od. dgl. zum Weiterbehandeln weiter transportiert wird. Dies soll ebenfalls im Rahmen der vorliegenden Erfindung liegen. Hierdurch ist von Vorteil, dass permanent frisches und gekühltes Wasser verwendet wird, so dass ebenfalls eine Haltbarkeit erhöht und Keimbildung minimiert ist.

Sofort nach dem letzten Abschrecken im letzten Tauchbecken wird die Teigware für ca. eine halbe Stunde in einem Kühlraum, der auf ± 0°C temperiert ist, gelagert. Durch diese Lagerzeit wird die Ware in sich abgerundet und durch den Kühlschock erneut stabilisiert (keine Keimbildung).

Mit dem erfindungsgemässen Verfahren wird eine Teigware hergestellt, die auch nach längerer Lagerung bei Herausnahme aus der Verpackung tagesfrisch wirkt und auch so schmeckt. Zu diesem Zweck ist es allerdings in einer weiteren Ausführung der Erfindung wichtig, dass der Transport und die Lagerung sowie der Abverkauf nur in gekühltem Zustand bei 4° bis 6°C erfolgt.

Ferner benutzt die vorliegende Erfindung zur Verpackung auch nicht Folien bekannter Stärke, sondern setzt für beispielsweise eine Schlauchbeutelanlage eine Folie mit der Stärke etwa 100 mµ ein. Durch diese hohe mµ-Zahl und damit hohe Wandstärke ist eine Sauerstoffdurchlässigkeit im grossen und ganzen ausgeschlossen.

Bei der Teigherstellung selbst schlägt die Erfindung vor, dass zuerst eine Mischung der Bestandteile des Teiges in einem Mixer erfolgt. Danach wird ein spezielles Rührwerk in den Mischbehälter eingetaucht und die Masse so lange mit dem Rührwerk behandelt bzw. Luft unter den Teig geschlagen, bis dieser Blasen schlägt. Erst dann ist der Teig bereit für eine Formung in einer Formeinrichtung.

Erfindungsgemäss weist eine Formeinrichtung für das Herstellen von Spätzle einen Trichter mit anschliessendem Schlitzgehäuse auf, wobei sich der Teig über das Schlitzgehäuse verteilt. Durch sein Eigengewicht sinkt der Teig durch das Schlitzgehäuse und tritt bandförmig aus dem Schlitzgehäuse aus, wobei er in unterschiedlichen Längen durch sein Eigengewicht abreisst.

Eine Formeinrichtung für Schupfnudeln weist dagegen unterhalb eines Trichters für den Teig eine Schnecke auf, durch die der Teig stark komprimiert wird. Da der Teig selbst wesentlich weniger Wasser und Ei besitzt, haftet er nicht so stark zusammen, so dass er in kürzeren Abschnitten aus dem Schneckenauslass heraus und auf ein Förderband fällt. Durch ein speziell geformtes Blech erhalten dann diese kurzen Abschnitt die Gestalt von Schupfnudeln.

Selbstverständlich ist auch daran gedacht, dem Teig noch entsprechende Gewürze zuzusetzen, beispielsweise bieten sich hier Granulate von Pfeffer und Muskat an.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
Figur 1 eine schematisch dargestellte Seitenansicht einer Anlage zum Herstellen von Teigwaren;
Figur 2 eine schematisch dargestellte Seitenansicht eines Teils einer Formeinrichtung für Teigwaren;
Figur 3 eine Stirnansicht der Formeinrichtung gemäss Figur 2.

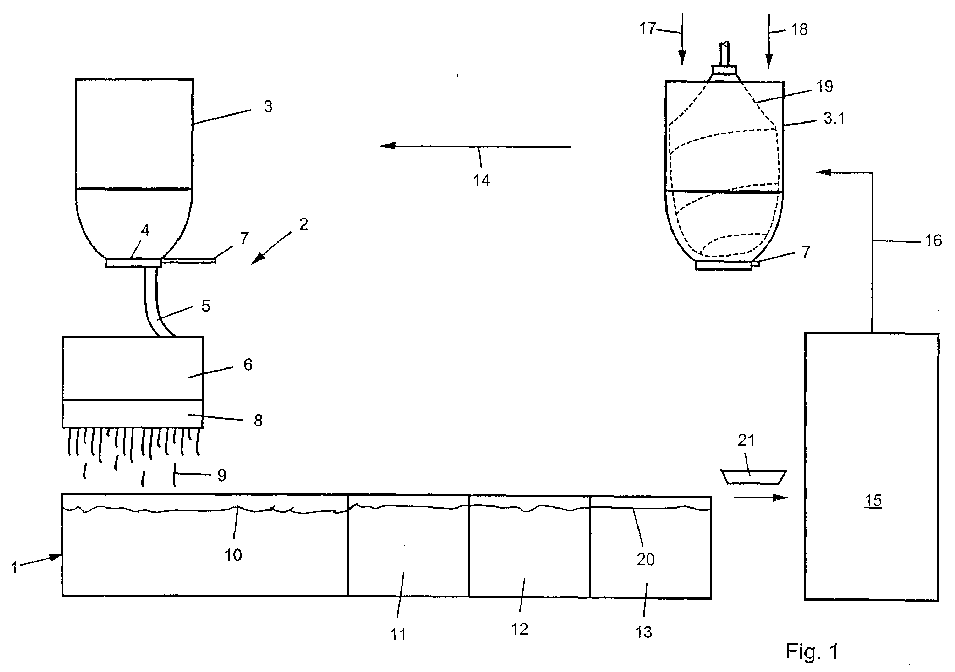

In der in Figur 1 angedeuteten Anlage zum Herstellen von Teigwaren ist über einem ersten Becken 1 eine Formeinrichtung 2 für Teigwaren vorgesehen. Diese Formeinrichtung 2 weist einen Mischbehälter 3 auf, aus dessen Auslassöffnung 4 ein Teigstrang 5 in einen Trichter 6 abgeleitet wird. Die Auslassöffnung 4 ist bevorzugt mittels eines Schiebers 7 verschliessbar.

Der Teigstrang 5 wird bevorzugt über die Länge des Trichters 6 verteilt, wobei damit der Teig relativ gleichmässig in ein Schlitzgehäuse 8 gelangt. Aus diesem Schlitzgehäuse 8 fällt der Teig durch sein Eigengewicht in das Becken 1 ein, wobei sich beim Abriss von dem Schlitzgehäuse 8 Spätzle 9 unterschiedlicher Länge bilden.

In dem Becken 1 befindet sich kochendes Wasser 10.

Auf das Becken 1 folgen drei Kühlbecken 11, 12 und 13.

Die Funktionsweise der vorliegenden Erfindung ist folgende:

In einem zweiten Mischbehälter 3.1, der später den Mischbehälter 3 ersetzt, wie durch den Pfeil 14 angedeutet, wird der Teig für die Teigwaren angemischt. Hierzu werden beispielsweise aus einem Kühlraum 15 durch den Pfeil 16 angedeutete tiefgefrorene, pasteurisierte Volleier und/oder tiefgefrorenes Eigelb geholt und zusammen mit Wasser 17 und Mehl 18 in den Mischbehälter 3.1 eingegeben. Dort erfolgt zuerst ein Mischen der tiefgefrorenen Eier mit dem Mehl und dem Wasser mittels eines Mixers, wobei nur immer eine relativ kleine Einheit von ca. 120 kg verarbeitet wird.

Danach wird ein Rührwerk 19 in den Mischbehälter 3.1 eingesetzt und die Masse mit diesem Rührwerk 19 so lange behandelt und Luft unter den Teig geschlagen, bis dieser Blasen schlägt. Erst jetzt wird der Mischbehälter 3.1 den Mischbehälter 3 ersetzen. Der Schieber 7 wird geöffnet und der Teigstrang 5 gelangt in den Trichter 6 und von dort in das Schlitzgehäuse 8, so dass die Spätzle 9 aus dem Schlitzgehäuse 8 in das Becken 1 fallen können. In diesem Becken mit kochendem Wasser 10 werden die Spätzle auf ca. 95° bis 98°C erhitzt, sodann mit einem Sieb abgeschaufelt und in das erste Kühlbecken 11 gebracht. Vom Kühlbecken 11 gelangen die Spätzle auf gleiche Weise in das Kühlbecken 12 und in das Kühlbecken 13, dessen Kühlwasser 20 nur etwa 4°C hat.

Ferner ist diesem Kühlwasser 20 noch ein Mittel zum Absenken des pH-Wertes zugegeben. In einer bevorzugten Ausführungsform besteht dieses Mittel aus Natriumacetat und Ascorbinsäure.

Nach kurzer Verweildauer in dem Becken 13 werden die Spätzle abgeschöpft und bevorzugt in Schalen 21 in den Kühlraum 15 verbracht. Hier werden die Spätzle in den Schalen 21 für ca. eine halbe Stunde bei ± 0°C temperiert gelagert.

Danach erfolgt die Verpackung der Teigwaren in einer nicht näher gezeigten Schlauchbeutelanlage. Die abgefüllten Teigwaren werden in den entsprechenden Schlauchbeuteln gelagert bzw. transportiert, wobei Lagerung und Transport in gekühltem Zustand von etwa 4° bis 6°C erfolgen.

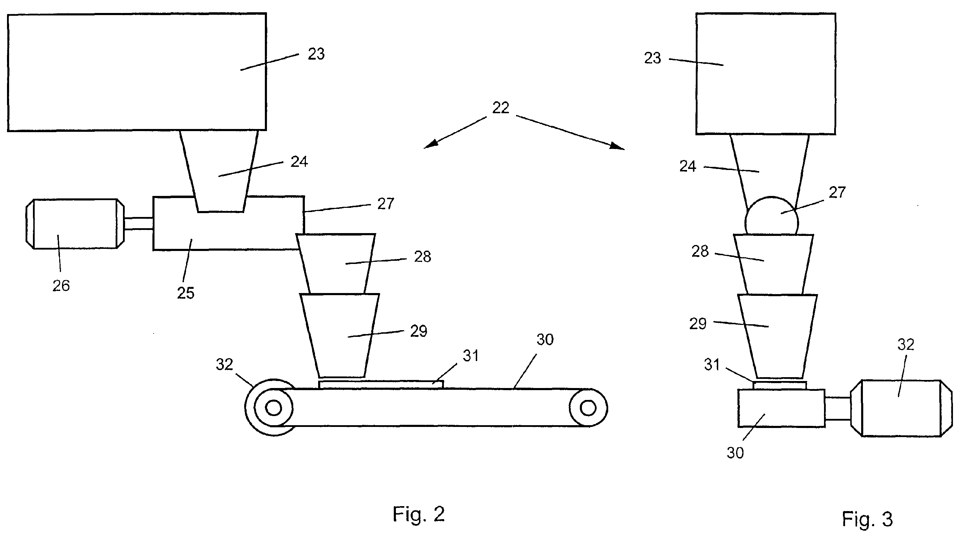

In den Figuren 2 und 3 ist als weiteres Ausführungsbeispiel eine Formeinrichtung 22 zum Herstellen von Schupfnudeln dargestellt. Bei dieser Formeinrichtung 22 gelangt der Teig aus einem Behälter 23 über einen Trichter 24 in eine Schnecke 25. Diese Schnecke 25 wird von einem starken Motor 26 mit ca. 6,5 PS angetrieben, wodurch eine hohe Komprimierung des Teigs in der Schnecke erreicht wird.

Von einem Schneckenauslass 27 gelangt der Teig über eine Trichterstufe 28 und 29 auf ein Förderband 30, welches von einem gering gewölbten Blech 31 teilweise überdeckt ist.

Die Funktionsweise dieser erfindungsgemässen Formeinrichtung ist folgende:

Für die Herstellung der Schupfnudeln wird ein Teig verwandt, welcher relativ wenig Wasser und Ei beinhaltet. Dementsprechend ist der Teig auch geringer zusammenhängend, so dass die kürzeren Schupfnudeln gebildet werden können.

Der Teig gelangt von dem Behälter durch den Trichter 24 in die Schnecke 25 und wird dort stark komprimiert. Durch die Trichterstufe 28 und 29 gelangen die aus dem Schneckenauslass 27 fallenden, schon teilweise geformten kurzen Teigstücke auf das Förderband 30 und werden dort unter dem Blech 31 hindurch geführt, wodurch sie ihre endgültige Form erlangen.

Ein Antrieb für das Förderband 30 ist mit 32 gekennzeichnet.

## Patentansprüche

1. Verfahren zum Herstellen von Teigwaren (9) aus im wesentlichen Mehl (18), Wasser (17) und gegebenenfalls Eiern (16), die zu einem Teig vermischt werden, wonach eine Formung der Teigwaren geschieht und diese danach gekocht werden,
**dadurch gekennzeichnet,**
**dass** nach dem Kochvorgang eine schnelle Abkühlung erfolgt und die Teigware (9) anschliessend für eine vorbestimmte Zeit in einem Kühlraum (15) temperiert wird.

2. Verfahren nach Anspruch 1, **dadurch gekennzeichnet, dass** der Kochvorgang die Teigwaren auf ca 90°-100°C, bevorzugt auf etwa 95°-98°C bringt.

3. Verfahren nach Anspruch 1 oder 2, **dadurch gekennzeichnet, dass** die Abkühlung nach dem Kochvorgang im Wasser oder durch Bewässerung bei ca. 3°-4°C erfolgt.

4. Verfahren nach Anspruch 3, **dadurch gekennzeichnet, dass** ein Absenken des pH-Wertes der Teigware (9) erfolgt und ggf. der pH-Wert auf ca. 4,9 abgesenkt wird.

5. Verfahren nach wenigstens einem der Ansprüche 1-4, **dadurch gekennzeichnet, dass** zum Absenken des pH-Wertes ein Zusatz aus Natriumacetat und Ascorbinsäure verwendet wird.

6. Verfahren nach wenigstens einem der Ansprüche 1-5, **dadurch gekennzeichnet, dass** die Temperierung der Teigwaren im Kühlraum (15) etwa eine halbe Stunde bei ± 0°C erfolgt.

7. Verfahren zum Herstellen von Teigwaren (9) aus im wesentlichen Mehl (18), Wasser (17) und gegebenenfalls Eiern (16), die zu einem Teig vermischt werden, **dadurch gekennzeichnet, dass** zuerst eine Mischung der Bestandteile des Teiges in einem Mixer erfolgt und danach mit einem Rührwerk (19) so lange Luft unter den Teig geschlagen wird, bis dieser Blasen schlägt.

8. Verfahren zum Herstellen von Teigwaren (9) aus im wesentlichen Mehl (18), Wasser (17) und gegebenenfalls Eiern (16), die zu einem Teig vermischt werden, **dadurch gekennzeichnet, dass** zum Herstellen von Spätzle der Teig aus einem Schlitz (8) eines Trichters (6) fallen gelassen wird.

9. Verfahren nach Anspruch 8, **dadurch gekennzeichnet, dass** der Trichter (6) über kochendem Wasser (10) angeordnet wird, so dass die durch ihr Eigengewicht geformten Spätzle (9) direkt in das Wasser fallen.

10. Verfahren zum Herstellen von Teigwaren (9) aus im wesentlichen Mehl (18), Wasser (17) und gegebenenfalls Eiern (16), die zu einem Teig vermischt werden, **dadurch gekennzeichnet, dass** zum Herstellen von Schupfnudeln der Teig vor dem Kochvorgang stark komprimiert wird.

11. Verfahren nach Anspruch 10, **dadurch gekennzeichnet, dass** dem Mehl (18) nur relativ wenig Wasser (17) und Eier (16) beigegeben werden.

12. Anlage zum Durchführen des Verfahrens nach wenigstens einem der Ansprüche 1-11 mit einer Formeinrichtung (2, 22) für die Teigware und einem anschliessenden Becken (1) mit kochendem Wasser (10), **dadurch gekennzeichnet, dass** auf das Becken (1) mit kochendem Wasser (10) zumindest ein Kühlbecken (11, 12, 13), eine Kühlstrecke od. dgl. folgt.

13. Anlage nach Anspruch 12, **dadurch gekennzeichnet, dass** über dem Becken (1) mit kochendem Wasser (10) als Formeinrichtung für Spätzle (9) ein Trichter (6) mit einem Schlitzgehäuse (8) angeordnet ist, in dem sich der Teig befindet.

14. Anlage nach Anspruch 12, **dadurch gekennzeichnet, dass** als Formeinrichtung (22) für Schupfnudeln in einem Teigtrichter (24) eine Schnecke (25) zum Komprimieren und und Weiterfördern des Teigs angeordnet ist.

15. Anlage nach Anspruch 14, **dadurch gekennzeichnet, dass** einem Schneckenauslass (27) ein Trichter (28, 29) zum Ableiten des Teigs auf ein Förderband (30) zugeordnet ist, und dieses von einem geringfügig gewölbten Blech (31) zumindest teilweise überspannt ist.

16. Verpackung für nach dem Verfahren nach wenigstens einem der Ansprüche 1-6 hergestellten Teigwaren aus einer Kunststoffolie, **dadurch gekennzeichnet, dass** die Folie eine Wandstärke von 90-100 mµ und darüber aufweist.
